# EUROPÄISCHE PATENTSCHRIFT

(11) **EP 0 629 806 B1**
(45) Veröffentlichungstag und Bekanntmachung des Hinweises auf die Patenterteilung: **29.12.1997**
(21) Anmeldenummer: 94107810.7
(22) Anmeldetag: 20.05.1994
(51) Int. Cl.: F16L 37/084, F16L 37/14

(54) **Kältemittelkupplung zur Verbindung von Kältemittelleitungen**
Connection for refrigerant conduits
Raccord pour conduits pour fluides frigorigènes

(30) Priorität: 08.06.1993 DE 4318878
(43) Veröffentlichungstag der Anmeldung: 21.12.1994
(73) Patentinhaber: KÜHNER GmbH & CIE, D-71570 Oppenweiler (DE)
(72) Erfinder: Behr, Mathias, D-97074 Würzburg (DE); Holzer, Thomas, D-71522 Backnang (DE); Hunn, Horst, D-75417 Mühlacker-Dürrmenz (DE); Scheyhing, Ulrich, D-71364 Winnenden (DE)
(74) Vertreter: Wilhelm & Dauster Patentanwälte European Patent Attorneys

(56) Entgegenhaltungen:
- EP-A- 0 444 523
- DE-A- 3 502 424
- DE-A- 3 729 570
- DE-C- 3 143 015
- GB-A- 2 103 322
- US-A- 2 590 565
- US-A- 3 990 727
- US-A- 4 600 221
- US-A- 4 869 534
- US-A- 4 874 174

## Beschreibung

Die Erfindung betrifft eine Kältemittelkupplung zur Verbindung von Kältemittelleitungen, insbesondere für den Einsatz in Kraftfahrzeugen, mit zwei als Stecker einerseits und als Muffe andererseits ineinandersteckbaren und mittels wenigstens eines Dichtelementes gegeneinander abdichtbaren Rohranschlüssen, die mittels einer Verschlußanordnung in einer ineinandergesteckten Position axial sicherbar sind.

Aus der DE 35 02 424 A1 ist eine Kältemittelkupplung für Klimaanlagen von Kraftfahrzeugen bekannt, die mit einer Steckverbindung versehen ist. Zur Verbindung von zwei Rohren einer Kältemittelleitung ist der eine Rohranschluß mit einem als Muffe dienenden Aufnahmestutzen versehen, der einen aufgeweiteten Endbereich aufweist. Der andere Rohranschluß ist mit einem als Stecker dienenden Einsteckstutzen versehen, der paßgenau in den Aufnahmestutzen einsteckbar ist. Die Innenwandung des Aufnahmestutzens und der Außenumfang des Einsteckstutzens liegen aneinander an. Zur Verbesserung der Dichtwirkung zwischen Einsteckstutzen und Aufnahmestutzen sind zwischen diesen umlaufende Dichtringe vorgesehen. Um die beiden Rohranschlüsse in der ineinandergesteckten Position axial sichern zu können, ist eine Verschlußanordnung in Form eines Spannringes vorgesehen, der durch eine in Umfangsrichtung wirkende Spiralfeder unterstützt ist. Ein durch den Spannring axial zusammendrückbares, axial federndes Element, das zwischen radial nach außen abragenden Aufbördelungen des Einsteckstutzens und des Aufnahmestutzens angeordnet ist, dient als Verdrehsicherung für die Rohranschlüsse.

Aus der US-PS 2 590 565 ist eine Schnellkupplung zur Verbindung von Rohrleitungen bekannt, bei denen ein als Stecker dienender, mit einem konisch aufgeweiteten Bereich versehener Rohranschluß in den anderen, als Muffe dienenden und mit einem aufgeweiteten Bereich versehenen Rohranschluß einsteckbar ist. Die Verbindung zwischen den beiden Rohranschlüssen wird durch einen elastischen Dichtungsring abgedichtet, der radial zwischen dem sich konisch erweiternden Bereich des Steckers und dem aufgeweiteten Bereich der Muffe angeordnet ist und sich axial über nahezu die gesamte Länge des konisch aufgeweiteten Bereiches des Steckers erstreckt. Zur Sicherung der ineinandergesteckten Position ist ein einen Anschlagbund des Steckers axial hintergreifender Sicherungsring vorgesehen.

Aus der DE 31 43 015 C2 ist eine Schnellkupplung zur Verbindung von Kältemittelleitungen für den Einsatz in Kraftfahrzeugen bekannt, bei denen die beiden Rohranschlüsse der Kältemittelleitungen als Stecker bzw. als Muffe ausgebildet und axial ineinandersteckbar sind. Der Stecker ist mit einem sich konisch erweiternden Bund versehen. Die Muffe ist gegenüber dem Durchmesser des Steckers zylindrisch aufgeweitet. Um eine galvanische Korrosion zu vermeiden, sind der Stecker und die Muffe unter Zwischenfügung eines Abstandstückes, eines elastischen Dichtungsringes und einer Buchse in radialem Abstand ineinandergesteckt. Die Buchse und das Abstandsstück dienen zur Führung und Stützung des Steckers in der Muffe für eine Stabilisierung der Verbindung zwischen den beiden Kältemittelleitungen, der Dichtring dient zur Abdichtung der Verbindung der beiden Rohranschlüsse. Die Buchse und das Abstandsstück sind wie auch der aus einem Elastomer bestehende Dichtungsring aus elektrisch nicht leitendem Werkstoff hergestellt.

Aufgabe der Erfindung ist es, eine Kältemittelkupplung der eingangs genannten Art zu schaffen, die bei einfacher und zuverlässiger Montage mit einfachen Mitteln eine sichere Dichtwirkung und eine stabile Verbindung zwischen den Kältemittelleitungen gewährleistet.

Diese Aufgabe wird dadurch gelöst, daß die Buchse formstabil gestaltet ist und sich über die gesamte Strecklänge des Ringraumes zwischen Stecker und Muffe erstreckt, daß die Buchse mit ihrem Außenumfang kraftschlüssig und dicht in einen Aufnahmebereich der Muffe einpaßbar ist, und daß die Buchse an ihrem Innenumfang mit wenigstens zwei axial zueinander versetzt angeordneten, umlaufenden Dichtelementen zur dichten und kraftschlüssigen Umfassung des Steckers versehen ist. Als Dichtelemente sind insbesondere als O-Ringe ausgebildete Dichtungsringe, umlaufende Dichtlippen und Dichtungsstege vorgesehen. Dadurch stellt das Kombielement lediglich ein einzelnes Bauteil dar, in dem jedoch drei wesentliche Funktionen vereinigt sind. Zum einen dient das Kombielement zur Abdichtung der Verbindung zwischen den Kältemittel leitungen, wobei die Zentrierung des Steckers in der Muffe eine über den gesamten Umfang gleichbleibende Dichtwirkung erzielt. Die Integrierung von Dichtelementen in dem Kombielement bedeutet, daß die Dichtelemente als getrennte Teile mit dem Kombielement durch Einlegen oder Einlagern in entsprechende Vertiefungen oder Ringnuten des Kombielementes mit diesem form- und/oder kraftschlüssig verbunden sind oder bereits bei der Herstellung des Kombielementes einstückig an diesem angeformt werden, insbesondere durch Anspritzen oder ähnliches. Dadurch, daß das nicht leitfähige Kombielement den Stecker ohne eine Berührung zur Muffe in dieser hält, wird eine Korrosion bei metallischen Rohranschlüssen wirksam vermieden. Neben der Dichtwirkung und der Zentrierwirkung weist das Kombielement auch eine Stützfunktion für die Kupplung auf, da es über die Stecklänge von Stecker und Muffe den Ringraum im wesentlichen formschlüssig ausfüllt. Durch diese Stützwirkung ergibt sich eine kompakte und stabile Verbindung zwischen den beiden Kältemittelleitungen, wodurch auch Belastungen im Fahrbetrieb eines Kraftfahrzeuges durch die Kältemittelkupplung aufgenommen werden können, ohne daß sich die Positionierung von Stecker und Muffe relativ zueinander verändert, wodurch eine verschlechterte Dichtwirkung entstehen könnte.

Eine Kontaktkorrosion wird dadurch insbesondere bei Metallrohren wirksam vermieden. Im Gegensatz zum Stand der Technik ist lediglich ein einzelnes Bauteil, nämlich das Kombielement vorgesehen, wo hingegen beim Stand der Technik gemäß der DE 31 43 015 C2 bereits zum Erzielen einer ausreichenden Dicht- und Stützwirkung drei verschiedene Elemente, nämlich das Abstandsstück, der Dichtungsring und die Buchse, notwendig sind. Durch die erfindungsgemäße Lösung wird eine einfache und schnelle Montage bei einer hohen Genauigkeit und Stabilität der geschaffenen Verbindung erzielt. Die erfindungsgemäße Kältemittelkupplung ist daher insbesondere für Klimaanlagen im Motorraum von Kraftfahrzeugen geeignet, bei denen im Fahrbetrieb relativ hohe Belastungen auf die Kältemittelkupplung ausgeübt werden.

In Ausgestaltung der Erfindung ist das ringförmige Kombielement aus Kunststoff hergestellt, an seinem Außenumfang kraftschlüssig und dicht in einen Aufnahmebereich der Muffe einpaßbar, und an seinem Innenumfang mit wenigstens zwei axial zueinander versetzt angeordneten, umlaufenden Dichtelementen versehen. Das kraftschlüssige und dichte Einpassen in den Aufnahmebereich der Muffe erfolgt bei verschiedenen erfindungsgemäßen Ausführungsbeispielen entweder durch Einkleben, durch Einpressen oder durch Einfügen in Verbindung mit einem Vorsehen von umlaufenden Dichtungsringen oder Dichtlippen am Außenumfang des Kombielementes, die einen dichten und kraftschlüssigen Sitz in der Muffe gewährleisten.

Durch die Anordnung von zwei umlaufenden Dichtelementen am Innenumfang des ringförmigen Kombielementes in axialem Abstand zueinander ist ein gegenüber lediglich einem Dichtelement verbesserter Toleranzausgleich möglich, durch den eine sichere Dichtwirkung erzielt wird.

In weiterer Ausgestaltung der Erfindung ist die Verschlußanordnung mit einem auf der Muffe axial formschlüssig gehaltenen Verschlußring versehen, in dem eine zum axialen Einstecken und Herausziehen des Steckers radial aufspreizbare und den Stecker in der Muffe in der ineinandergesteckten Position axial formschlüssig arretierende Verschlußklammer verliersicher eingebunden ist. Dadurch ist es möglich, zwei als Stecker und als Muffe ineinander gesteckte Rohranschlüsse zweier Kältemittelleitungen in der ineinandergesteckten Position zu sichern und zu arretieren. Ein Lösen der Verbindung wird dadurch zuverlässig vermieden. Es wird gewährleistet, daß die Verschlußklammer auch nach der Demontage nicht verloren gehen kann und so die Verschlußanordnung jederzeit funktionstüchtig ist.

In weiterer Ausgestaltung der Erfindung ist die Verschlußklammer als mit einem geschlossenen Querschnitt versehene, den Stecker im montierten Zustand umschließende Feder ausgebildet, die sich an einer Innenwandung des Verschlußringes abstützt und wenigstens ein von einer Außenseite des Verschlußringes zugängliches Angriffselement zum Lösen der Verschlußklammer aufweist. Die Verschlußklammer ist also sowohl im montierten als auch im demontierten Zustand des Verschlußrings verliersicher in dem Verschlußring gehalten und aus ihrer den Stecker axial hintergreifenden Position in einfacher Weise von der Außenseite des Verschlußringes her durch den Angriff einer Hand oder eines Werkzeuges an dem jeweiligen Angriffselement so weit aufspreizbar, daß der Stecker in axialer Richtung freigegeben wird.

In weiterer Ausgestaltung der Erfindung sind als Angriffselemente auf zwei gegenüberliegenden Seiten der Feder zwei Angriffszapfen vorgesehen, die durch die Wandung des Verschlußringes radial nach außen hindurchragen. Dadurch werden die Angriffszapfen in einfacher Weise von den beiden gegenüberliegenden Seiten des Verschlußringes her radial nach innen gedrückt, wodurch die Verbindung zwischen den beiden Rohranschlüssen gelöst wird.

In weiterer Ausgestaltung der Erfindung ist ein halbschalenförmiges Demontagewerkzeug vorgesehen, das auf den Verschlußring aufsetzbar ist und zum Lösen der Feder mit zwei auf Höhe der Angriffszapfen radial nach innen ragenden Nocken versehen ist. Beim Aufsetzen des Demontagewerkzeuges auf den Verschlußring drücken sich die beiden Nocken in die Öffnung des Verschlußringes für die Angriffszapfen hinein, wodurch die Angriffszapfen nach innen gedrückt werden. Durch das Aufspreizen der Feder ist in einfacher Weise die Verbindung zwischen Stecker und Muffe gelöst.

In weiterer Ausgestaltung der Erfindung ist das Demontagewerkzeug mit einer bundartigen Fangkante zum formschlüssigen axialen Sichern des Steckers bei der Demontage versehen, die bis über die radiale Höhe des Steckerbundes radial nach innen abragt und im aufgesetzten Zustand in axialem Abstand zum Steckerbund angeordnet ist. Kältemittelleitungen stehen im Betrieb unter einem hohen Druck. Um bei der Demontage der Kältemittelkupplung zu vermeiden, daß der Stecker durch den hohen Druck in den Kältemittelleitungen nach dem Lösen der Verschlußklammer unkontrolliert schlagartig axial nach hinten weggedrückt wird, ist die Fangkante vorgesehen, die den Stecker auffängt und in einer gelockerten Position relativ zur Muffe hält.

In weiterer Ausgestaltung der Erfindung ist der axiale Abstand geringer als die axiale Länge des Kombielementes. Dadurch wird gewährleistet, daß der Stecker auch nach dem Lösen noch im Bereich der Muffe positioniert gehalten wird.

In weiterer Ausgestaltung der Erfindung sind die beiden Halbschalen auf einer Seite mittels einer Scharnierverbindung schwenkbar miteinander verbindbar und auf der gegenüberliegenden Seite mittels einer Rastverbindung ringförmig zusammenschließbar. Dadurch können die beiden Halbschalen in aufgeklapptem Zustand über die Muffe geführt und zusammengedrückt werden, so daß sie die Muffe übergreifen. Die Demontage erfolgt in umgekehrter Weise.

In weiterer Ausgestaltung der Erfindung weist die Scharnierverbindung wenigstens zwei formschlüssig gegeneinander verrastbare und relativ zueinander verschwenkbare Rastelemente auf, die jeweils an der einen und an der anderen Halbschale angeordnet sind. Dadurch wird eine Scharnierclipverbindung geschaffen, die einfach herstellbar ist und eine schnelle Montage und Demontage zuläßt.

In weiterer Ausgestaltung der Erfindung ist die Verschlußklammer als im wesentlichen U-förmiger, elastisch spreizbarer Bügel gestaltet. Dabei ist die Verschlußklammer in dem Verschlußring im montierten Zustand in einer Radialebene zu einer Mittellängsachse der Kältemittelkupplung radial aufspreizbar gehalten, wobei der Betrag der Aufspreizbarkeit wenigstens dem maximalen Durchmesser des Steckers entspricht. Beim Einschieben des Steckers in die Muffe drückt daher ein entsprechend konisch erweiterter Abschnitt des Steckers die Verschlußklammer auseinander, bis diese hinter dem Kragen dieses erweiterten Abschnitts wieder nach innen springt und den Stecker axial sichert. Somit wird bei der Montage eine Einhandbedienung ermöglicht, d.h. das Zusammenstecken der Kältemittelkupplung kann mittels einer Robotermontage erfolgen.

In weiterer Ausgestaltung der Erfindung ist der U-förmige Bügel mit einer als Angriffsfläche für ein Werkzeug dienenden Ausformung versehen. Mittels eines geeigneten Werkzeuges kann die Verschlußklammer daher mit einem schnellen Handgriff entfernt werden.

In weiterer Ausgestaltung der Erfindung ist die Verschlußklammer in dem Verschlußring versenkt gehalten und die freien Enden des U-förmigen Bügels der Verschlußklammer sind durch zwei Durchbrüche im Verschlußring mittels eines Werkzeugs zugänglich. Dadurch wird ein unbefugtes Lösen der Verschlußklammer verhindert, da diese lediglich mittels eines Werkzeuges zugänglich und demontierbar ist.

In weiterer Ausgestaltung der Erfindung weist die Verschlußanordnung für eine Verbindung von Stecker und Muffe in einer definierten Position eine formschlüssige Verdrehsicherung auf. In einfacher Weise sind dabei am Verschlußring und am zugeordneten Kragen des Steckers bzw. der Muffe entsprechend ineinandergreifende Zapfen und Nuten vorgesehen.

Weitere Vorteile und Merkmale der Erfindung ergeben sich aus den Unteransprüchen sowie aus der nachfolgenden Beschreibung von Ausführungsbeispielen der Erfindung, die anhand der Zeichnungen dargestellt sind.
- Fig. 1: zeigt in einem Schnitt eine Ausführungsform einer erfindungsgemäßen Kältemittelkupplung, wobei zwischen Stecker und Muffe der beiden Rohranschlüsse ein zur Dichtung, Zentrierung und Stützung der Verbindung zwischen den beiden Rohranschlüssen dienender Kombiring vorgesehen ist,
- Fig. 2: einen Querschnitt durch die Kältemittelkupplung nach Fig. 1 entlang der Schnittlinie II-II in Fig. 1 auf Höhe eines Verschlußringes zur Sicherung der ineinandergesteckten Position von Stecker und Muffe,
- Fig. 3: den aus zwei Halbschalen bestehenden Verschlußring nach Fig. 2 in aufgeklapptem Zustand,
- Fig. 4: in einem Schnitt eine weitere Ausführungsform einer Kältemittelkupplung ähnlich Fig. 1, wobei der Verschlußring mit einem integrierten Federring als Verschlußklammer versehen ist und auf diesen ein Demontagewerkzeug aufgesetzt ist,
- Fig. 5: einen Querschnitt durch die Kältemittelkupplung nach Fig. 4 entlang der Schnittlinie V-V in Fig. 4, wobei der Federring durch das Demontagewerkzeug zur Freigabe des Steckers aufgespreizt ist.
- Fig. 6: in einem Querschnitt die Kältemittelkupplung nach den Fig. 4 und 5 ohne Demontagewerkzeug, bei der der Federring sich im arretierten Zustand befindet,
- Fig. 7: in vergrößerter Darstellung einen Schnitt durch den Kombiring nach den Fig. 1 und 4, wobei jedoch die integrierten Dichtringe nicht dargestellt sind,
- Fig. 8: in einem Querschnitt eine weitere Ausführungsform ähnlich den Fig. 5 und 6, bei der die Verschlußklammer mit über die Außenseite des Verschlußringes radial hinausragenden Angriffszapfen zum Aufspreizen der Verschlußklammer versehen ist,
- Fig. 9: in einem Querschnitt eine weitere Ausführungsform einer in einem Verschlußring integrierten Verschlußklammer in Form eines Federringes, die mittels eines von außen ansetzbaren Schraubenziehers aufspreizbar ist, und
- Fig. 10: eine U-förmig gebogene Verschlußklammer ähnlich Fig. 2, die mit einer Ausformung für den Angriff eines Werkzeugs versehen ist.

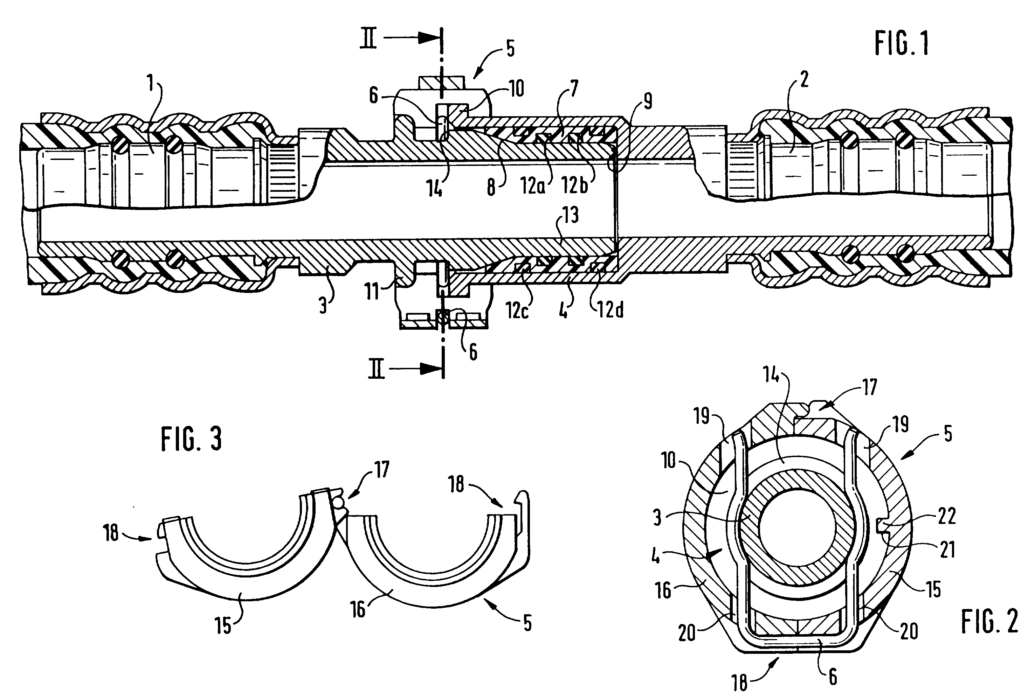

Eine Kältemittelkupplung in Form einer Schnellkupplung nach Fig. 1 zur Verbindung von zwei als Kältemittelleitungen dienenden Rohren (1, 2) ist für die Verbindung von Kältemittelleitungen einer Klimaanlage eines Kraftfahrzeugs vorgesehen. Die Rohrleitung (1) weist einen aus Metall hergestellten stutzenartigen Rohranschluß auf, der als Stecker (3) für die als Kältemittelkupplung dienende Schnellkupplung ausgebildet ist. Der Stecker (3) weist an seinem freien Stirnende einen zylindrischen Rohrabschnitt (13) auf, an den in axialer Richtung zur Rohrleitung (1) hin ein sich konisch erweiternder Einsteckkragen (8) anschließt. Der Einsteckkragen (8) ist zur Rohrleitung (1) hin unter Bildung einer radial nach innen gerichteten Abschlußkante (14) in einen zylindrischen Abschnitt weitergeführt, der nicht näher bezeichnet ist. An diesen zylindrischen Abschnitt schließt ein radial nach außen abragender Schutzkragen (11) an, dessen Funktionen nachfolgend noch näher beschrieben werden. Der metallische Rohranschluß ist in an sich bekannter Weise dicht mit einem Schlauch der Rohrleitung (1) verbunden.

Die gegenüberliegende Kältemittelleitung (2) weist an ihrem Ende einen ebenfalls stutzenförmigen, metallischen Rohranschluß auf, der als Muffe (4) ausgebildet ist. Die Muffe (4) weist einen glockenartigen Aufnahmebereich mit zylindrischer Innenwandung auf, der im montierten Zustand der Kältemittelkupplung entsprechend Fig. 1 den Stecker (3) axial übergreift, jedoch radial zu diesem beabstandet ist. Die Muffe (4) nach Fig. 1 stellt ein Drehteil dar, bei dem der glockenartige Aufnahmebereich innen ausgedreht ist. Der glockenartige Aufnahmebereich weist einen gegenüber dem zur Kältemittelleitung (2) hin anschließenden Bereich einen wesentlich vergrößerten Innendurchmesser auf. Dabei ist die Innenwandung des glockenartigen Aufnahmebereiches gegenüber dem zylindrischen Bereich geringeren Innendurchmessers mittels einer umlaufenden radialen Anschlagkante (9) abgestuft. Der Innendurchmesser des Steckers (3) entspricht dem Innendurchmesser des zur Kältemittelleitung (2) hin anschließenden zylindrischen Bereiches der Muffe (4). Das freie Ende des glockenartigen Aufnahmebereiches der Muffe (4) wird durch einen radial nach außen abragenden Bund (10) gebildet. Die axiale Länge des Aufnahmebereiches der Muffe (4) entspricht der axialen Länge des zylindrischen Rohrabschnitts (13) sowie des daran anschließenden Einsteckkragens (8) bis hin zur Abschlußkante (14) des Steckers (3). Der Innendurchmesser des Aufnahmebereiches der Muffe (4) ist etwas größer als der größte Außendurchmesser des Einsteckkragens (8).

Im ineinandergesteckten Zustand nach Fig. 1 ergibt sich zwischen dem konischen Abschnitt des Einsteckkragens (8) des Steckers (3) und der radialen Anschlagkante (9) der Muffe (4) ein ringförmiger Hohlraum, der formschlüssig durch einen ein ringförmiges Kombielement darstellenden Kombiring (7) ausgefüllt ist. Der Kombiring (7) ist aus einem nicht leitfähigen Material, beim Ausführungsbeispiel aus einem Polyamid-Kunststoff, hergestellt. Der Kombiring (7) stellt ein rotationssymmetrisches Element dar und ist mit einer zylindrischen Außenwandung versehen. Der Kombiring (7) weist im wesentlichen eine zylindrische Innenwandung auf, die lediglich im Bereich des einen Stirnendes mit einem konisch erweiterten Abschnitt (28) versehen ist, dessen Steigung und Länge an den konischen Abschnitt des Einsteckkragens (8) des Steckers (3) angepaßt ist. Der Innendurchmesser der zylindrischen Innenwandung ist an den Außendurchmesser des zylindrischen Rohrabschnitts (13) des Steckers (3) angepaßt. Der Außendurchmesser der Außenwandung des Kombiringes (7) ist entsprechend an den glockenartigen Aufnahmebereich der Muffe (4) angepaßt. Der Kombiring (7) weist zwei ringförmige, axial zueinander versetzte Außennuten (26) sowie zwei ringförmige, ebenfalls axial zueinander versetzte Innennuten (27) auf, wobei sowohl Außennuten (26) als auch Innennuten (27) als Ringnuten mit gleichem Querschnitt ausgebildet sind. Die Außennuten (26) sind auch zu den Innennuten (27) versetzt, wodurch die Dicke des Kombiringes (7) geringer gehalten werden konnte als die doppelte radiale Tiefe der Außen- oder Innennuten (26, 27). Diese Ringnuten dienen zur Aufnahme von elastischen Dichtungsringen (12a, 12b, 12c, 12d), die einfache O-Ringe aus entsprechend geeigneten elastischen Materialien darstellen. Der Kombiring (7) weist ein relativ steifes Material auf, so daß er eine gute Stabilität erhält. Auf der dem konischen Abschnitt (28) gegenüberliegenden Stirnseite weist der Kombiring (7) eine Stirnkante (29) auf, die in montiertem Zustand des Kombiringes (7) gegen die Anschlagkante (9) der Muffe (4) gedrückt ist. In dieser Position ist der Kombiring (7) durch die beiden elastisch zusammengedrückten Dichtungsringe (12c und 12d) einerseits in dem Aufnahmebereich der Muffe (4) kraftschlüssig und dicht gehalten. Andererseits klemmen die nach innen ragenden Dichtringe (12a und 12b) den zylindrischen Rohrabschnitt (13) des Steckers (3) und dichten diesen ab. Durch die Anordnung der Innennuten (27) und der Dichtungsringe (12a, 12b) in axialem Abstand zueinander wird ein guter Toleranzausgleich bei geringem radialen Versatz oder bei einer Verkippung des Steckers (3) in der Muffe (4) gewährleistet, der auch für diesen Fall eine sichere Dichtwirkung garantiert. Der Stecker (3) ist in der montierten Position so weit in den Kombiring (7) eingeschoben, bis der konische Abschnitt des Einsteckkragens (8) an dem konischen Abschnitt (28) des Kombiringes (7) zur Anlage kommt. In dieser Position schließt das freie Stirnende unter Einhaltung eines geringen axialen Abstandes zur Anschlagkante (9) nahezu bündig mit der Stirnkante (29) des Kombiringes (7) ab. Der Stecker (3) und die Muffe (4) sind so aufeinander abgestimmt, daß in der ineinandergesteckten Position nach Fig. 1 die Abschlußkante (14) mit der freien Stirnkante des Bundes (10) radial fluchtet.

Der Kombiring (7) nach den Fig. 1, 4 und 7 erfüllt mehrere Funktionen innerhalb der Schnellkupplung. Zum einen zentriert er den Stecker (3) derart radial in der Muffe (4), daß der Einsteckkragen (8) umlaufend den gleichen radialen Abstand zur Innenwandung des Aufnahmebereiches der Muffe (4) aufweist und so keine Kontaktkorrosion zwischen den metallischen Werkstoffen des Steckers (3) und der Muffe (4) auftreten kann. Da der Kombiring (7) den freien Ringraum zwischen der Muffe (4) und dem Stecker (3) nahezu vollständig formschlüssig ausfüllt und eine ausreichende Stabilität aufweist, bietet er eine stabile Stützung des Steckers (3) in der Muffe (4), so daß die bei der Montage bewirkte ineinandergesteckte Position zuverlässig und genau beibehalten werden kann, auch wenn Belastungen auf die Kältemittelkupplung auftreten. Ein Wackeln oder Verkanten des Steckers (3) in der Muffe (4), was zu Dichtproblemen oder Kontaktkorrosion führen könnte, wird durch diese Stützfunktion vermieden. Außerdem leistet der Kombiring (7) auch einen wesentlichen Beitrag dazu, daß der Stecker (3) so exakt in der Muffe (4) positioniert werden kann, daß die Abschlußkante (14) radial mit der Stirnkante des Bundes (10) fluchtet, daß jedoch andererseits das freie Stirnende des Steckers (3) nicht mit der Anschlagkante (9) der Muffe (4) in Berührung gelangt. Durch die in dem Kombiring (7) integrierten Dichtungsringe (12) dichtet der Kombiring (7) zudem die Verbindung zwischen dem Stecker (3) und der Muffe (4) ab.

Zur Arretierung dieser ineinandergesteckten Position von Stecker (3) und Muffe (4) ist eine Verschlußanordnung in Form eines Verschlußringes (5) vorgesehen, der im montierten Zustand mit einer Verschlußklammer (6) versehen ist (Fig. 2). Verschlußring (5) und Verschlußklammer (6) werden nachfolgend näher beschrieben. Der Verschlußring (5) (Fig. 3) weist zwei Halbschalen (15 und 16) auf, die mittels einer Scharnierclipverbindung (17) um eine zur Längsachse der Kältemittelkupplung parallele Scharnierachse schwenkbar miteinander verbunden sind. Dabei ist an der Halbschale (15) ein zu einer Seite hin offenes Scharnierelement angeformt, das mit einer Rastöffnung versehen ist. In diese Rastöffnung ist ein korrespondierender Rastzapfen eines weiteren Scharnierelementes hineingedrückt, das an der anderen Halbschale (16) angeformt ist. Auf der gegenüberliegenden Seite weisen die beiden Halbschalen (15 und 16) Rastelemente für eine Rastverbindung (18) auf, wobei an der Halbschale (16) ein Rasthaken und an der anderen Halbschale (15) eine korrespondierende Raststelle ausgebildet sind. Die beiden Halbschalen (15 und 16) sind an ihrem Innenumfang mit Nuten versehen, die an den Bund (10) der Muffe (4) sowie an den Schutzkragen (11) des Steckers (3) angepaßt sind. Zum Montieren des Verschlußringes (5) wird dieser in einfacher Weise im aufgeklappten Zustand auf einer Hälfte an den Bund (10) der Muffe (4) angesetzt, und anschliessend wird die zweite Halbschale auf die erste zusammengeklappt, wodurch der Verschlußring (5) den Bund (10) über seinen gesamten Umfang umschließt. Durch die Rastverbindung (18) ist der Verschlußring (5) auf dem Bund (10) arretiert. Der Innendurchmesser des Verschlußringes (5) ist etwas größer als der Außendurchmesser des Einsteckkragens (8) des Steckers (3), so daß der Stecker (3) auch bei auf die Muffe (4) aufgesetztem Verschlußring (5) in einfacher Weise axial in die Muffe (4) einschiebbar ist. Dabei ist entweder der Kombiring (7) bereits in der Muffe (4) oder auf dem Stecker (3) positioniert.

Um den Stecker (3) in der ineinandergesteckten Position axial zu sichern, ist eine im Verschlußring (5) gehaltene Verschlußklammer (6) vorgesehen, deren beide Schenkel die Abschlußkante (14) des Einsteckkragens (8) des Steckers (3) in einer Radialebene zu der Mittellängsachse der Kältemittelkupplung auf gegenüberliegenden Seiten umgreifen. Dazu ist in beiden Schenkeln der U-förmigen Verschlußklammer (6) (Fig. 2) ein bogenförmiger Sicherungsbereich ausgeformt, der jeweils an die Außenkontur des zylindrischen Rohrabschnitts (13) sowie des an die Abschlußkante (14) anschließenden zylindrischen Bereiches des Steckers (3) angepaßt ist. Die Sicherungsbereiche der Verschlußklammer hintergreifen daher in der ineinandergesteckten Position den Einsteckkragen (8) des Steckers (3) und fixieren den Stecker (3) axial. Im Verschlußring (5) sind zum Einsetzen der Verschlußklammer (6) zwei Durchbrüche (20) sowie auf den gegenüberliegenden Seiten zwei breitere Durchbrüche (19) vorgesehen. Die größere Breite der Durchbrüche (19) dient zum Ausgleich der elastischen Aufspreizung der Verschlußklammer (6) beim Einstecken des Steckers (3), da die beiden Schenkel dadurch nach außen gebogen werden. Außerdem dienen die Durchbrüche (19) für den Durchgriff eines Demontagewerkzeuges, da die Verschlußklammer (6) aufgrund ihrer versetzten Lage im Verschlußring (5) nicht ohne Werkzeug demontierbar ist. Durch ein Drücken gegen die Stirnenden der Schenkel der Verschlußklammer (6) wird diese aus dem Verschlußring (5) radial herausgeschoben. Beim dargestellten Ausführungsbeispiel ist die Verschlußklammer (6) aus einem Federdraht hergestellt. Die radiale Einschub- und Halteebene der Verschlußklammer (6) im Verschlußring (5) ist so an die Ringnut des Verschlußringes (5) angepaßt, daß die Ringnut in der ineinandergesteckten Position von Stecker (3) und Muffe (4) einerseits axial am Bund (10), die Verschlußklammer (6) hingegen andererseits an der Abschlußkante (14) anliegt.

Zur Montage der Kältemittelkupplung wird zunächst der Verschlußring (5) auf den Bund (10) der Muffe (4) aufgesetzt und die Verschlußklammer (6) in den Verschlußring (5) eingesteckt. Ist der Kombiring (7) bereits in der Muffe (4) positioniert, so wird nun in einfacher Weise der Stecker (3) in den Verschlußring (5) und in die Muffe (4) eingeschoben. Beim Hineinstecken des Steckers (3) drückt der konische Abschnitt des Einsteckkragens (8) die Schenkel der Verschlußklammer (6) nach außen. Sobald der Stecker (3) seine durch den Kombiring (7) definierte Endposition in der Muffe (4) erreicht hat, rasten die beiden Schenkel der Verschlußklammer (6) elastisch hinter dem Einsteckkragen (8) des Steckers (3) ein und stützen die Anschlagkante (14) des Steckers (3) axial. Diese Montage des Steckers (3) ist in einfacher Weise durch eine Einhandbedienung möglich. Dadurch kann die Kältemittelkupplung beispielsweise mittels eines Roboters auch automatisch montiert werden. Dadurch ist es auch möglich, den Rohranschluß des Steckers (3) direkt mit einer Rohrkrümmung zu versehen, wodurch die Gestaltungsmöglichkeiten des Kältemittelkreislaufes erweitert werden.

Auf Höhe des Schutzkragens (11) weist der Verschlußring (5) eine Ringnut auf, deren Durchmesser an den Durchmesser des Schutzkragens (11) angepaßt ist. Im montierten Zustand liegt daher der Schutzkragen (11) in Einsteckrichtung axial an der Ringnut an, wodurch das Innere der Kältemittelkupplung geschlossen und damit gegen Verschmutzung geschützt ist.

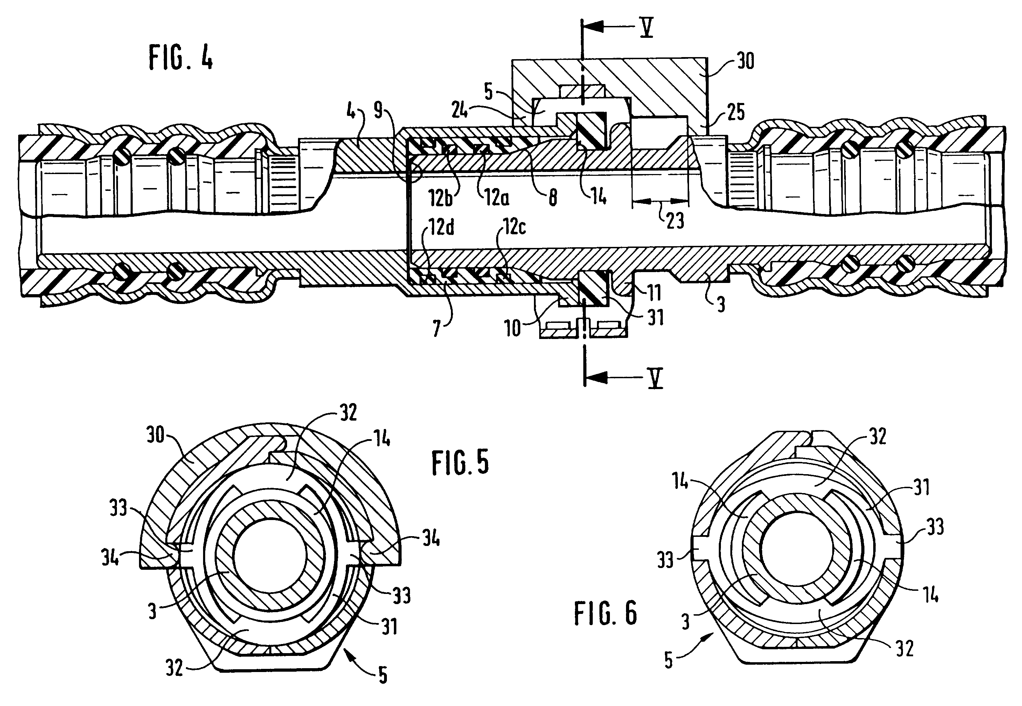

Beim Ausführungsbeispiel nach den Fig. 4 und 5 ist auf eine Kältemittelkupplung ähnlich den Fig. 1 bis 3 ein Demontagewerkzeug (30) für das Lösen des Steckers (3) von der Muffe (4) aufgesetzt. Bei diesem Ausführungsbeispiel nach den Fig. 4 bis 6 ist ein Verschlußring (5) für die Kältemittelkupplung vorgesehen, der im wesentlichen dem Verschlußring (5) der zuvor beschriebenen Ausführungsform nach den Fig. 1 bis 3 entspricht. In diesem Verschlußring (5) ist jedoch eine elastisch spreizbare Verschlußklammer verliersicher integriert, die mit einem geschlossenen Querschnitt gestaltet ist. Die Verschlußklammer ist in Form eines ovalen Federringes (31) gestaltet, der auf zwei gegenüberliegenden Seiten an der Innenwandung einer Ringnut zur Aufnahme des Federringes (31) im Verschlußring (5) anliegt. In diesen Bereichen ist der Verschlußring (5) jeweils mit einem radial nach außen gerichteten Durchbruch versehen, in die zwei Angriffszapfen (33) des Federringes (31) radial nach außen hineinragen. Um jeweils 90° versetzt weist der ovale Federring (31) zwei stegartige, radial nach innen ragende Sicherungslasc en (32) auf, die zur axialen Abstützung der Abschlußkante (14) des Steckers (3) in der montierten Position dienen. Werden die beiden Angriffszapfen (33) des Federringes (31) nun radial nach innen gedrückt, so werden die Sicherungslaschen (32) aufgrund der auftretenden Federkräfte entsprechend elastisch radial nach außen gespreizt. Die Sicherungslaschen (32) sind dabei so bemessen, daß der freie Querschnitt zwischen den gegenüberliegenden Sicherungslaschen (32) in der aufgespreizten Position des Federringes (31) größer ist als der Querschnitt des Einsteckkragens (8) des Steckers (3), so daß der Stecker (3) axial aus der Muffe (4) und dem Verschlußring (5) herausgezogen werden kann. Zum Aufspreizen des Federringes (31) dient das in den Fig. 4 und 5 aufgesetzte Demontagewerkzeug (30) in Form eines halbschalenförmigen Körpers, der auf Höhe der beiden Durchbrüche im Verschlußring (5) mit radial nach innen ragenden Nocken (34) versehen ist. Das Demontagewerkzeug (30) ist in gewissem Umfang elastisch spreizbar, so daß es beim Aufschieben auf den Verschlußring (5) durch das Entlanggleiten der beiden Nocken (34) auf dem Außenumfang des Verschlußringes (5) so lange aufgespreizt wird, bis die Nocken (34) in die Durchbrüche des Verschlußringes (5) eingreifen. Dadurch werden die Angriffszapfen (33) nach innen gedrückt, wodurch die Sicherungslaschen (32) auseinandergespreizt werden.

Das Demontagewerkzeug (30) weist eine Fangvorrichtung in Form einer bundartigen Fangkante (25) auf, die nachfolgend näher beschrieben wird. Die Fangkante (25) dient zum axialen Sichern des Steckers (3), wenn die durch die Kältemittelkupplung miteinander verbundenen Kältemittelleitungen bei der Demontage noch unter Druck stehen. In diesem Fall würde der Stecker (3) nämlich nach dem Lösen des als Verschlußklammer dienenden Federringes (31) unter hohem Druck in axialer Richtung nach hinten geschleudert werden, wodurch unkontrolliert Kältemittel aus dem Kältemittelkreislauf austreten könnte. Durch das unkontrollierte Nachhintenschleudern des Steckers (3) können außerdem Beschädigungen oder Verletzungen auftreten. Das Demontagewerkzeug (30) mit der Fangvorrichtung stellt ein halbschalenförmiges stabiles Bauteil dar, das an einem Stirnende mit einer Haltekante (24) und am gegenüberliegenden Stirnende mit der Fangkante (25) versehen ist, die beide radial nach innen abragen. Die Haltekante (24) ist Teil einer nutartigen Vertiefung im Bereich der Innenwandung des Demontagewerkzeuges (30), das an die Außenkontur des Verschlußringes (5) angepaßt ist. Dadurch ist das halbschalenförmige Demontagewerkzeug (30) axial formschlüssig auf den Verschlußring (5) aufsetzbar. Die radiale Höhe des Schutzkragens (11) und die radiale Tiefe der Fangkante (25) - jeweils auf die Mittellängsachse der Kältemittelkupplung bezogen - überlappen sich in axialer Richtung, so daß die Fangkante (25) sich in der axialen Bewegungsrichtung des Schutzkragens (11) befindet. Der axiale Abstand (23) der Fangkante (25) zum Schutzkragen (11) ist geringer als die axiale Länge des Kombiringes (7) und entspricht dem Abstand des Stirnendes des Steckers (3) zu dem Dichtungsring (12a), so daß der Stecker (3) nach der Demontage des Federringes (31) zwar noch im Kombiring (7) positioniert ist, jedoch nicht mehr durch den Dichtungsring (12a) geklemmt wird. Dadurch kann der Stecker (3) auch nach dem Lösen der Verschlußklammer nicht aus der Muffe (4) entfernt werden, solange die Fangkante (25) den Stecker (3) axial sichert.

Die Kältemittelkupplung nach den Fig. 1 bis 3 sowie nach den Fig. 4 bis 6 ist mit einer formschlüssigen Verdrehsicherung versehen, so daß der Stecker (3) und die Muffe (4) lediglich in einer definierten Position ineinandersteckbar sind. Dazu ist im Bund (10) der Muffe (4) eine axiale Nut (21) vorgesehen. Auch im Schutzkragen (11) ist eine entsprechende, jedoch nicht näher bezeichnete Nut vorgesehen. Dazu korrespondierend weist der Verschlußring (5) auf Höhe des Bundes (10) einen Nocken (22) auf, der in der montierten Position in die axiale Nut (21) eingreift. In gleicher Weise weist der Verschlußring (5) auf Höhe des Schutzkragens (11) einen weiteren Nocken auf, der in die axiale Nut des Schutzkragens (11) eingreift. Im montierten Zustand ist daher eine Verdrehung von Stecker (3) und Muffe (4) relativ zueinander nicht möglich.

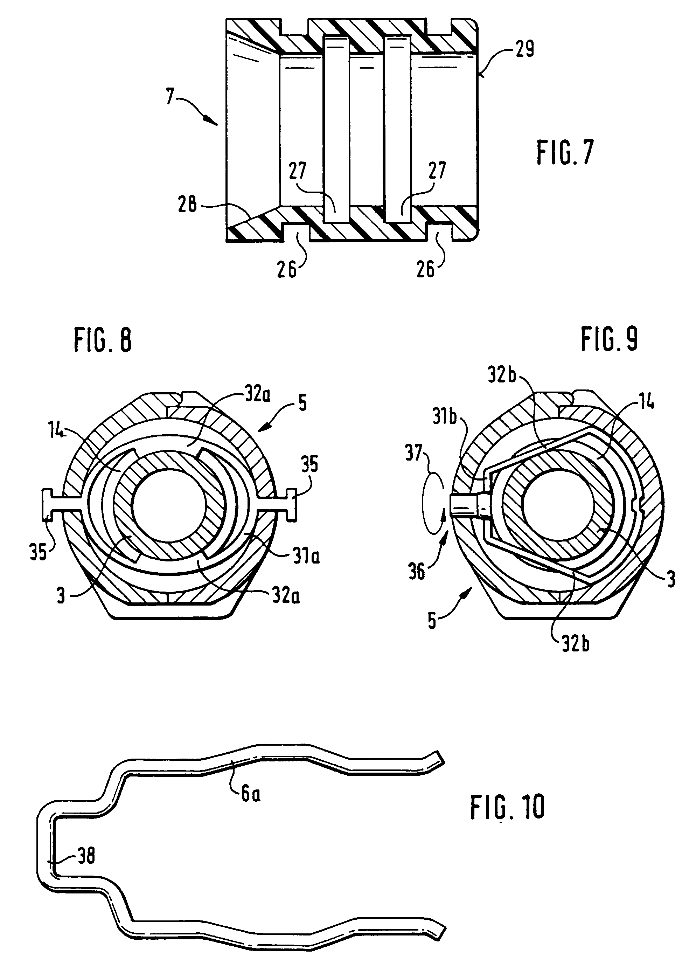

Eine Verschlußklammer (6a) gemäß der Ausführungsform nach Fig. 10 entspricht im wesentlichen der U-förmig gebogenen Verschlußklammer (6) nach Fig. 2. Die Verschlußklammer (6a) ist jedoch zusätzlich mit einer ebenfalls U-förmig gebogenen kleinen Ausbuchtung (38) versehen, die als Angriffsfläche für ein Werkzeug dient. Dadurch ist es möglich, die Verschlußklammer (6a) mittels eines geeigneten Werkzeuges in einfacher Weise aus dem Verschlußring (5) herauszuziehen, was bei der Ausführung nach Fig. 2 lediglich dadurch möglich ist, daß ein gabelförmiges Werkzeug auf der Seite der Durchbrüche (19) gegen die Enden der beiden Schenkel der Verschlußklammer (6) drückt. Durch die Ausbuchtung (38) ist daher eine vereinfachte Demontage der Verschlußklammer (6a) möglich.

Die als Federring (31a) ausgebildete Verschlußklammer nach Fig. 8 ist nahezu identisch mit dem Federring (31) nach den Fig. 4 bis 6. Bei der Ausführungsform nach Fig. 8 sind lediglich die in dieDurchbrüche des Verschlußringes (5) ragenden Angriffszapfen mit außerhalb der Außenkontur des Verschlußringes (5) befindlichen Köpfen (35) versehen, die in radialem Abstand zur Außenkontur des Verschlußringes (5) angeordnet sind. Dadurch ist es möglich, die beiden Köpfe (35) beispielsweise durch den Druck von Mittelfinger und Daumen einer Hand mittels eines Handgriffes zusammenzudrücken, wodurch die Sicherungslaschen (32a) des Federringes (31a) zum Freigeben des Steckers (3) auseinandergespreizt werden.

Die Ausführungsform nach Fig. 9 weist eine weitere Verschlußklammer auf, die ebenfalls als geschlossener Federring (31b) ausgebildet ist. Der Federring (31b) weist einen in der Ringnut des Verschlußringes (5) anliegenden Ringabschnitt sowie zwei Schenkel (32b) auf, die zur axialen Abstützung der Abschlußkante (14) des Steckers (3) dienen. Beide Schenkel (32b) sind auf Höhe eines Exzenters (36) miteinander verbunden, der drehbar in der Wandung des Verschlußringes (5) gelagert ist. Durch eine Verdrehung des Exzenters (36) in Richtung des Pfeiles (37) werden daher die beiden Schenkel (32b) auseinandergespreizt, wodurch der Stecker (3) in axialer Richtung freigegeben wird. Der Exzenter (36) ist in Form eines quaderförmigen Vierkantes ausgebildet, der eine gegenüber seiner Breite wesentlich größere Länge aufweist. Wird der Exzenter (36) daher um 90° verdreht, so spreizt er die Schenkel (32b) nicht mittels seiner - wie dargestellt - Breitseite, sondern mittels seiner Längsseite, wodurch diese den Stecker (3) freigeben.

## Patentansprüche

1. Kältemittelkupplung zur Verbindung von Kältemittelleitungen, insbesondere für den Einsatz in Kraftfahrzeugen, mit zwei als Stecker einerseits und als Muffe andererseits ineinandersteckbaren und mittels wenigstens eines Dichtelementes gegeneinander abdichtbaren Rohranschlüssen, die mittels einer Verschlußanordnung in einer ineinandergesteckten Position axial sicherbar sind, in der der Stecker über eine in die Muffe einsetzbare Buchse aus nicht leitfähigem Material in der Muffe zentriert und in radialem Abstand zu der Muffe gehalten ist, wobei der Stecker einen nach außen abragenden, ringförmigen Einsteckkragen aufweist, der zur Begrenzung der Einstecktiefe des Steckers an der Buchse axial anschlägt, dadurch gekennzeichnet, daß die Buchse (7) formstabil gestaltet ist und sich über die gesamte Stecklänge des Ringraumes zwischen Stecker (3) und Muffe (4) erstreckt, daß die Buchse (7) mit ihrem Außenumfang kraftschlüssig und dicht in einen Aufnahmebereich der Muffe (4) einpaßbar ist, und daß die Buchse (7) an ihrem Innenumfang mit wenigstens zwei axial zueinander versetzt angeordneten, umlaufenden Dichtelementen (12a, 12b) zur dichten und kraftschlüssigen Umfassung des Steckers (3) versehen ist.

2. Kältemittelkupplung nach Anspruch 1, dadurch gekennzeichnet, daß die Buchse (7) an ihrem Außen- und an ihrem Innenumfang mit je zwei axial zueinander versetzten Ringnuten (26; 27) versehen ist, in die elastischen Dichtungsringe (12a, 12b, 12c, 12d) eingelegt sind.

3. Kältemittelkupplung nach einem der vorhergehenden Ansprüche, dadurch gekennzeichnet, daß die Verschlußanordnung mit einem auf der Muffe (4) axial formschlüssig gehaltenen Verschlußring (5) versehen ist, in dem eine zum axialen Einstecken und Herausziehen des Steckers (3) radial aufspreizbare und den Stecker (3) in der Muffe (4) in der ineinandergesteckten Position axial formschlüssig arretierende Verschlußklammer (6, 6a, 31, 31a, 31b) verliersicher eingebunden ist.

4. Kältemittelkupplung nach Anspruch 3, dadurch gekennzeichnet, daß der Verschlußring (5) zwei lösbar miteinander verbindbare Halbschalen (15, 16) aufweist.

5. Kältemittelkupplung nach Anspruch 4, dadurch gekennzeichnet, daß die Verschlußklammer (31, 31a, 31b) als mit einem geschlossenen Querschnitt versehener, den Stecker (3) im montierten Zustand umschließender Federring ausgebildet ist, der sich an einer Innenwandung des Verschlußringes (5) abstützt und wenigstens ein von einer Außenseite des Verschlußringes (5) zugängliches Angriffselement (33, 35, 36) zum Lösen der Verschlußklammer (31, 31a, 31b) aufweist.

6. Kältemittelkupplung nach Anspruch 5, dadurch gekennzeichnet, daß als Angriffselement auf zwei gegenüberliegenden Seiten des Federringes (31, 31a) zwei Angriffszapfen (33, 35) vorgesehen sind, die durch die Wandung des Verschlußringes (5) radial nach außen hindurchragen.

7. Kältemittelkupplung nach Anspruch 6, dadurch gekennzeichnet, daß ein halbschalenförmiges Demontagewerkzeug (30) vorgesehen ist, das auf den Verschlußring (5) aufsetzbar ist und zum Lösen des Federringes (31) mit zwei auf Höhe der Angriffszapfen (33) radial nach innen ragenden Nocken (34) versehen ist.

8. Kältemittelkupplung nach Anspruch 7, dadurch gekennzeichnet, daß das Demontagewerkzeug (30) mit einer bundartigen Fangkante (25) zum formschlüssigen axialen Sichern des Steckers (3) bei der Demontage versehen ist, die bis über die radiale Höhe eines Schutzkragens (11) des Steckers (3) radial nach innen abragt und bei der Demontage im aufgesetzten Zustand in axialem Abstand zum Schutzkragen (11) angeordnet ist.

9. Kältemittelkupplung nach Anspruch 8, dadurch gekennzeichnet, daß der axiale Abstand zwischen Schutzkragen (11) und Fangkante (25) geringer ist als die axiale Länge der Buchse (7).

10. Kältemittelkupplung nach einem der vorhergehenden Ansprüche, dadurch gekennzeichnet, daß die Verschlußanordnung für eine Verbindung von Stecker (3) und Muffe (4) in einer definierten Position eine formschlüssige Verdrehsicherung (21, 22) aufweist.

11. Kältemittelkupplung nach einem der vorhergehenden Ansprüche, dadurch gekennzeichnet, daß die beiden Halbschalen (15, 16) auf einer Seite mittels einer Scharnierverbindung (17) schwenkbar miteinander verbindbar sind und auf der gegenüberliegenden Seite mittels einer Rastverbindung (18) ringförmig zusammenschließbar sind.

12. Kältemittelkupplung nach Anspruch 11, dadurch gekennzeichnet, daß die Scharnierverbindung (17) wenigstens zwei formschlüssig gegeneinander verrastbare und relativ zueinander schwenkbare Rastelemente aufweist, die jeweils an der einen und an der anderen Halbschale (15, 16) angeordnet sind.

13. Kältemittelkupplung nach einem der vorhergehenden Ansprüche, dadurch gekennzeichnet, daß die Verschlußklammer als im wesentlichen U-förmiger, elastisch spreizbarer Bügel gestaltet ist.

14. Kältemittelkupplung nach Anspruch 10, dadurch gekennzeichnet, daß der U-förmige Bügel mit einer als Angriffsfläche für ein Werkzeug dienenden Ausformung (38) versehen ist.

15. Kältemittelkupplung nach einem der vorhergehenden Ansprüche, dadurch gekennzeichnet, daß die Verschlußklammer (6) in dem Verschlußring (5) versenkt gehalten ist und die freien Enden des U-förmigen Bügels der Verschlußklammer (6) durch zwei Durchbrüche (19) im Verschlußring (5) mittels eines Werkzeugs zugänglich sind.

## Claims

1. A refrigerant coupling to connect refrigerant lines, in particular for use in motor vehicles, with two pipe connectors, one designed as a male attachment and the other as a female attachment, which can be inserted one into the other and sealed by means of at least one sealing element, and which can be secured axially by means of a locking arrangement in a connected position in which the male attachment is centred inside the female attachment by means of a bush made of a non-conductive material which can be inserted inside the female attachment and held at a radial distance from the female attachment, whereby the male attachment has an outward protruding, ring-shaped collar which rests axially against the bush in order to limit the extent to which the male attachment is inserted,
**characterised in that** the bush (7) is of a dimensionally stable design and extends the entire length of the ring-shaped area along which the male attachment (3) is inserted into the female attachment (4), that the external circumference of the bush (7) can fit tightly in a non-positive connection into a receiving area of the female attachment (4) and that the internal circumference of the bush (7) is provided with at least two axially offset, circumferential sealing elements (12a, 12b) to encompass the male attachment (3) tightly in a non-positive connection.

2. A refrigerant coupling in accordance with Claim 1,
**characterised in that** the external and internal circumferences of the bush (7) are each provided with two axially offset ring grooves (26; 27) into which are inserted elastic packing rings (12a, 12b, 12c, 12d).

3. A refrigerant coupling in accordance with one of the preceding claims,
**characterised in that** the locking arrangement is provided with a locking ring (5) which is held on to the female attachment (4) by means of an axial, positive connection and in which a locking clamp (6, 6a, 31, 31a, 31b), which can be opened radially for the axial insertion and removal ofthe male attachment (3) and which blocks the male attachment (3) in the female attachment (4) in the inserted position axially in a positive connection, is fixed in such a manner that it cannot be lost.

4. A refrigerant coupling in accordance with Claim 3,
**characterised in that** t the locking ring (5) consists of two shells (15, 16) which can be connected together in such a way that they can be separated.

5. A refrigerant coupling in accordance with Claim 4,
**characterised in that** the locking clamp (31, 31a, 31b) is designed as a spring lock washer with a closed cross section which encloses the male attachment (3) when fitted and which rests on an inner wall of the locking ring (5) and has at least one engaging element (33, 35, 36) accessible from the outside ofthe locking ring (5) to open the locking clamp (31, 31a, 31b).

6. A refrigerant coupling in accordance with Claim 5,
**characterised in that** two engaging pins (33, 35) which protrude radially outwards through the wall of the locking ring (5) are located on opposite sides of the spring lock washer (31, 31a) as engaging elements.

7. A refrigerant coupling in accordance with Claim 6,
**characterised in that** a shell-shaped removal tool (30) is provided which can be placed on the locking ring and which is provided with two radially inward protruding cams (34) at the level of the engaging pins (33) to open the spring lock washer (31).

8. A refrigerant coupling in accordance with Claim 7,
**characterised in that** the removal tool (30) is provided with a wedging edge (25) to secure the male attachment (3) axially in a positive connection during removal which protrudes radially inwards past the radial height of a protective collar (11) on the male attachment (3) and is positioned at an axial distance from the protective collar (11) during removal when placed in position.

9. A refrigerant coupling in accordance with Claim 8,
**characterised in that** the axial distance between the protective collar (11) and the wedging edge (25) is smaller than the axial length of the bush (7).

10. A refrigerant coupling in accordance with one of the preceding claims,
**characterised in that** the locking arrangement for the connection between the male attachment (3) and the female attachment (4) has a positive anti-twist locking device (21, 22) in a defined position.

11. A refrigerant coupling in accordance with one of the preceding claims,
**characterised in that** t the two shells (15, 16) can be connected on one side by means of a hinge connection in such a manner that they can be closed to form a ring by means of a snap-in connecting device (18) on the opposite side.

12. A refrigerant coupling in accordance with Claim 11,
**characterised in that** the hinged connector (17) has at least two engaging elements which can be snapped together in a positive connection and which can be pivoted in relation to one another, one of which is positioned on each ofthe shells (15, 16).

13. A refrigerant coupling in accordance with one of the preceding claims,
**characterised in that** the locking clamp is designed essentially as a U-shaped, elastically opening stirrup.

14. A refrigerant coupling in accordance with Claim 10,
**characterised in that** the U-shaped stirrup is provided with a recess (38) which serves as an engaging surface for a tool.

15. A refrigerant coupling in accordance with one of the preceding claims,
**characterised in that** the locking clamp (6) is held inserted in the locking ring (5) and the free ends of the U-shaped stirrup of the locking clamp (6) are accessible through two openings (19) in the locking ring (5) by means of a tool.

## Revendications

1. Dispositif d'accouplement pour agent réfrigérant, destiné à l'assemblage de conduits d'agent réfrigérant, prévu en particulier pour être utilisé dans des véhicules automobiles et comprenant deux raccords de tuyaux conformés d'une part en embout mâle et d'autre part en embout femelle s'emboîtant et rendus étanches l'un par rapport à l'autre à l'aide d'au moins un élément d'étanchéité et qui peuvent être bloqués axialement en position emboîtée au moyen d'un système de verrouillage, dans lequel l'embout mâle est centré dans l'embout femelle par une douille en matériau non conducteur s'emboîtant dans l'embout femelle et est tenu à distance radiale par rapport à l'embout femelle, l'embout mâle comprenant un collet annulaire d'emboîtement débordant vers l'extérieur et entrant axialement en butée contre la douille afin de limiter la profondeur d'emboîtement de l'embout mâle, caractérisé en ce que la douille (7) est façonnée de manière à être indéformable et se prolonge sur la totalité de la longueur d'emboîtement de l'espace annulaire compris entre l'embout mâle (3) et l'embout femelle (4), en ce que la circonférence extérieure de la douille (7) est adaptable à force et étroitement dans une zone de logement de l'embout femelle (4) et en ce que la circonférence intérieure de la douille (7) est équipée d'au moins deux éléments circonférentiels d'étanchéité (12a, 12b) décalés axialement l'un par rapport à l'autre et destinés à enserrer l'embout mâle (3) de manière étanche et à force.

2. Dispositif d'accouplement pour agent réfrigérant selon la revendication 1, caractérisé en ce que la douille (7) comporte aussi bien sur la circonférence extérieure que sur la circonférence intérieure deux gorges annulaires (26 ; 27) décalées axialement l'une par rapport à l'autre et dans lesquelles des joints élastiques d'étanchéité (12a, 12b, 12c, 12d) sont montés.

3. Dispositif d'accouplement pour agent réfrigérant selon l'une des revendications précédentes, caractérisé en ce que le système de verrouillage est équipé d'un anneau de verrouillage (5) qui est tenu axialement par complémentarité de formes sur l'embout femelle (4) et dans lequel est engagée de manière imperdable une agrafe de verrouillage (6, 6a, 31, 31a, 31b) qui peut être écartée radialement pour l'introduction et l'extraction axiales de l'embout mâle (3) et qui bloque axialement par complémentarité de formes l'embout mâle (3) dans l'embout femelle (4) à la position emboîtée.

4. Dispositif d'accouplement pour agent réfrigérant selon la revendication 3, caractérisé en ce que l'anneau de verrouillage (5) comprend deux demi-frettes (15, 16) se reliant de manière amovible l'une à l'autre.

5. Dispositif d'accouplement pour agent réfrigérant selon la revendication 4, caractérisé en ce que l'agrafe de verrouillage (31, 31a, 31b) est conformée en anneau élastique ayant une section fermée, entourant l'embout mâle (3) à l'état monté, prenant appui contre une paroi intérieure de l'anneau de verrouillage (5) et comprenant au moins un élément d'attaque (33, 35, 36) accessible par un côté extérieur de l'anneau de verrouillage (5) pour le dégagement de l'agrafe de verrouillage (31, 31a, 31b).

6. Dispositif d'accouplement pour agent réfrigérant selon la revendication 5, caractérisé en ce que l'élément d'attaque qui est prévu consiste en deux tenons d'attaque (33, 35) qui sont situés sur deux côtés opposés de l'anneau élastique (31, 31a) et qui passent radialement vers l'extérieur à travers la paroi de l'anneau de verrouillage (5).

7. Dispositif d'accouplement pour agent réfrigérant selon la revendication 6, caractérisé en ce qu'un outil de démontage en forme de demi-enveloppe (30) qui est prévu peut se poser sur l'anneau de verrouillage (5) et comporte deux mentonnets (34) situés au niveau des tenons d'attaque (33) et orientés radialement vers l'intérieur pour le dégagement de l'anneau élastique (31).

8. Dispositif d'accouplement pour agent réfrigérant selon la revendication 7, caractérisé en ce que l'outil de démontage (30) comporte un rebord de prise (25) en forme de collet qui est destiné à bloquer axialement l'embout mâle (3) par complémentarité de formes lors du démontage, qui se prolonge radialement vers l'intérieur jusqu'au dessus de la hauteur radiale d'une collerette (11) de protection faisant partie de l'embout mâle (3) et qui, à l'état monté, est disposé à distance axiale de la collerette de protection (11) lors du démontage.

9. Dispositif d'accouplement pour agent réfrigérant selon la revendication 8, caractérisé en ce que la distance axiale séparant la collerette de protection (11) et le rebord de prise (25) est inférieure à la longueur axiale de la douille (7).

10. Dispositif d'accouplement pour agent réfrigérant selon l'une des revendications précédentes, caractérisé en ce que le système de verrouillage destiné à l'assemblage de l'embout mâle (3) et de l'embout femelle (4) comporte à une position définie un arrêt (21, 22) bloquant toute rotation par complémentarité de formes.

11. Dispositif d'accouplement pour agent réfrigérant selon l'une des revendications précédentes, caractérisé en ce que les deux demi-frettes (15, 16) peuvent être reliées pivotantes sur un côté au moyen d'un assemblage à charnière (17) et peuvent être raccordées en anneau sur le côté opposé au moyen d'un assemblage à encliquetage (18).

12. Dispositif d'accouplement pour agent réfrigérant selon la revendication 11, caractérisé en ce que l'assemblage à charnière (17) comprend deux éléments d'encliquetage pouvant être enclenchés l'un dans l'autre par complémentarité de formes, pouvant pivoter l'un par rapport à l'autre et qui sont disposés d'une part sur l'une des demi-frettes (15, 16) et d'autre part sur l'autre.

13. Dispositif d'accouplement pour agent réfrigérant selon l'une des revendications précédentes. caractérisé en ce que l'agrafe de verrouillage est conformée en étrier sensiblement en U et pouvant être écarté élastiquement.

14. Dispositif d'accouplement pour agent réfrigérant selon la revendication 10, caractérisé en ce que l'étrier en U comporte une structure (38) débordant vers l'extérieur et servant de surface d'attaque pour un outil.

15. Dispositif d'accouplement pour agent réfrigérant selon l'une des revendications précédentes, caractérisé en ce que l'agrafe de verrouillage (6) est tenue noyée dans l'anneau de verrouillage (5) et les extrémités libres de l'étrier en U de l'agrafe de verrouillage (6) sont accessibles au moyen d'un outil par deux trous (19) de l'anneau de verrouillage (5).
